# EUROPEAN PATENT APPLICATION

(11) **EP 4 783 486 A1**
(43) Date of publication of application: **29.07.2026**
(21) Application number: 25154536.4
(22) Date of filing: 28.01.2025
(51) Int. Cl.: H04B 10/07, G02B 6/44

(54) **A METHOD FOR MONITORING A FIBER-OPTIC ROUTING PLATFORM**

(71) Applicant: Deutsche Telekom AG, 53113 Bonn (DE)
(72) Inventor: NÖCKEL, Philipp, 53721 Siegburg (DE)
(74) Representative: RDL Patentanwälte PartG mbB

(57) **Abstract**

A method for monitoring a fiber-optic routing platform, the fiber-optic routing platform comprising a rack and a plurality of optic ports, cables, connectors and fixed optic attenuators, FOATT, arranged in the rack, wherein the fiber-optic routing platform is monitored during a maintenance session of the fiber-optic routing platform. The invention further relates to a monitoring unit for a fiber-optic routing platform and computer program product.

## Description

The invention relates to a method for monitoring a fiber-optic routing platform, the fiber-optic routing platform comprising a rack and a plurality of optic ports, cables, connectors and fixed optic attenuators, FOATT, arranged in the rack, wherein the fiber-optic routing platform is monitored during a maintenance session of the fiber-optic routing platform. The invention further relates to a monitoring unit for a fiber-optic routing platform and a computer program product.

Methods of the above-mentioned kind are known in the state of the art having different embodiments and being used for preventing a fiber-optic routing platform from being impaired, i.e., adversely affected during a maintenance session. Herein, the maintenance session is a plurality of manual interactions with the fiber-optic routing platform within a time interval. The fiber-optic routing platform, e.g., based on a Juniper^{®} MX960 usually comprises a rack and a plurality of optic ports, optic cables, optic connectors and fixed optic attenuators, FOATT, arranged in the rack.

A FOATT is a passive device and is configured for reducing a signal strength of a light passing through the FOATT to be reduced by a constant amount. FOATTs comprise a highly stable attenuating material, e.g., a light absorbing or scattering material like a glass having dopants or a metal film. Different FOATTs are calibrated to have well-defined damping factors differing by 1 dB.

However, FOATTs are very sensitive regarding a mechanical stress like twisting or bending which can cause the attenuation material to crack or fracture, the misalignment and the crack or fracture altering the damping factor or eventually resulting in a complete failure of the FOATT. Unfortunately, in high density fiber-optic routing platforms bending or twisting of FOATTs of adjacent optic ports can hardly be avoided when a particular optic port is serviced during a maintenance session.

Servicing the particular optic port may also result in adjacent FOATTs being loosened or misaligned. A loose or misaligned FOATT may also adversely affect a quality of a light passing through the FOATT.

It is, therefore, an object of the invention to suggest a method for monitoring a fiber-optic routing platform which efficiently ensures a reliable success of a maintenance session of the fiber-optic routing platform. Further objects of the invention are to provide a monitoring unit for a fiber-optic routing platform and a computer program product.

An aspect of the invention is a method for monitoring a fiber-optic routing platform, the fiber-optic routing platform comprising a rack and a plurality of optic ports, optic cables, optic connectors and fixed optic attenuators, FOATT, arranged in the rack, wherein the fiber-optic routing platform is monitored during a maintenance session of the fiber-optic routing platform. The fiber-optic routing platform may be a high-density fiber-optic routing platform, e.g., the Juniper^{®} MX960.

According to the invention, a monitoring unit is connected to a fiber-optic routing platform, the monitoring unit receives a start signal from the fiber-optic routing platform, the start signal indicating a maintenance session of the fiber-optic routing platform to be started; and the monitoring unit, upon reception of the start signal, automatically starts measuring periodically an optic run-time parameter of an optic port the monitoring unit is connected to, recording each measured value of the optic run-time parameter and triggering an alert when evaluating recorded values indicate a malfunction of the fiber-optic routing platform caused by the maintenance session. The monitoring unit is connected to the rack and to the optic port. The start signal activates the monitoring unit. A period of the measurement may be, e.g. a second or few seconds. The alert may be displayed acoustically, e.g., by a sound like one or more beeps, or visually, e.g., by a light like one or more blinks. Of course, different types of malfunction may trigger different types of alerts. In a favorable embodiment, the alert may precisely indicate the optic port suffering from the malfunction. The alert may alternatively or additionally be visually displayed by a display of the monitoring unit as a text and/or a graphic.

A service person maintaining the fiber-optic routing platform, e.g., a service person manually interacting with the fiber-optic routing platform is immediately warned by the triggered alert in case the maintenance impairs the fiber-optic routing platform. The service person, hence, readily recognizes and eliminates the impairment, thus ensuring a success of the maintenance session of the fiber-optic routing platform.

Evaluating the recorded values may comprise comparing a pattern of recorded values with a plurality of predetermined patterns indicating a malfunction of the fiber-optic routing platform caused by the maintenance session and triggering an alert when the pattern matches a predetermined pattern. A pattern is partial time series of the measured optic run-time parameter, i.e., a plurality of pairs of times and corresponding values of the measured run-time parameter. Twisting and bending optic cables are activities which may cause a permanent malfunction of the optic port during the maintenance session. Each type of permanent malfunction corresponds to a characteristic pattern of the measured optic run-time parameter. Such characteristic patterns are used as the predetermined patterns. A permanent malfunction is required to be eliminated during the maintenance session. The alert ensures the elimination of the permanent malfunction.

Evaluating the recorded values may also comprise comparing a pattern of recorded values with a plurality of predetermined patterns indicating a temporary impairment of the fiber-optic routing platform caused by the maintenance session and not triggering the alert when the pattern matches a predetermined pattern. Twisting and bending optic cables are manual maintenance interactions with the fiber-optic routing platform which may cause a temporary malfunction of the optic port during the maintenance session. Each type of temporary malfunction corresponds to a characteristic pattern of the measured optic run-time parameter. Such characteristic patterns are applied as the predetermined patterns. Temporary malfunctions are ignored during the maintenance session.

Preferably, the monitoring unit receives a stop signal from the fiber-optic routing platform, the stop signal indicating the maintenance session having been stopped; and the monitoring unit, upon reception of the stop signal, evaluates the values recorded between the received start signal and the received stop signal and triggers an alert when evaluating the recorded values indicates a functional degradation of the fiber-optic routing platform caused by the maintenance session or predicts a future failure of the fiber-optic routing platform. The stop signal stops measuring the optic run-time parameter and starts evaluating the recorded values. The concluding evaluation of the recorded values ensures a success of the maintenance session. The maintenance session is not successful in case a function of the fiber-optic routing platform has degraded due to the maintenance session or in case a future failure of the fiber-optic routing platform is estimated to be probable. In these cases, the triggered alert warns the service person having finished the maintenance session. The service person may resume maintaining the fiber-optic routing platform, i.e., start another maintenance session in order to eventually render the fiber-optic routing platform fully and reliably functional. The maintenance session has been successful in case no alert is triggered.

Evaluating the recorded values particularly comprises comparing values recorded before a start of the maintenance session with values recorded after a stop of the maintenance session and triggering the alert when a difference of the compared values exceeds a predetermined degradation tolerance. The excessive difference indicates an unacceptable functional degradation of the fiber-optic routing platform. The predetermined degradation tolerance defines a range of acceptable deteriorations of the measured optic run-time parameter.

Evaluating the recorded values may comprise comparing recorded values with a predetermined acceptance interval and triggering the alert when the compared values are outside the predetermined acceptance interval. The acceptance interval defines a range of acceptable values of the measured optic run-time parameter. A value outside the predetermined acceptance interval indicates an unacceptable value of the measured optic run-time parameter.

In an embodiment, evaluating the recorded values comprises comparing a pattern of recorded values with a plurality of predetermined patterns indicating a future failure of the fiber-optic routing platform and triggering the alert when the pattern matches a predetermined pattern.

In an embodiment, the triggered alert indicates a functional degradation, a malfunction or a failure of an optic connector or a functional degradation, a malfunction or a damage of a FOATT. Due to its internal structure, the FOATT is very easily impaired by any mechanical stress like twisting or bending an optic cable connected to the FOATT. As a consequence, FOATTs are easily impaired during a maintenance session.

Preferably, a door sensor of the fiber-optic routing platform provides the monitoring unit with the start signal and/or the stop signal when a door of the rack is opened and/or closed. The monitoring unit is connected to the door sensor in order to control the monitoring unit just by opening and closing the door of the rack. This way, monitoring the maintenance session is relevantly facilitated for the service person.

Recording the measured value may comprise storing the measured value in a time-series database, TSDB. The time-series database is optimized for storing and querying a plurality of pairs of times and corresponding values, time-value pairs for short, and, hence, allows for a high efficiency of the monitoring.

In an embodiment, the monitoring unit simultaneously measures the optic run-time parameter of a plurality of optic ports or each optic port of the fiber-optic routing platform and/or simultaneously measures a plurality of optic run-time parameters and/or simultaneously measures a signal strength, a receive power, an optic to signal noise ratio, OSNR, a back reflection coefficient, an attenuation level and/or an error rate as optic run-time parameters. The simultaneous measurement of many optic ports or all optic ports of the fiber-optic routing platform allows for widely or completely monitoring the fiber-optic routing platform regarding the measured optic run-time parameter which increases an efficiency of the monitoring. The simultaneous measurement of many optic run-time parameters also allows for widely or completely monitoring the fiber-optic routing platform. The listed optic run-time parameters are exemplary and do not restrict the invention.

Preferably, an artificial neural network of the monitoring unit evaluates the recorded values. The artificial neural network is optimized for identifying patterns in large amounts of data. Time series, i.e., pairs of times and values, provide large amounts of data.

The artificial neural network may be trained with historic session data, the historic session data comprising values recorded during a previous maintenance session. The training of the artificial neural network successively refines a model of the fiber-optic routing platform represented by the artificial neural network, thus increasing an accuracy of the monitoring.

Another aspect of the invention is a monitoring unit for a fiber-optic routing platform. The monitoring comprises a computing device, e.g., a smartphone, a tablet, a notebook and the like.

According to the invention, the computing device is configured for carrying out a method according to an embodiment of the invention. The monitoring unit efficiently ensures a reliable success of a maintenance session of the fiber-optic routing platform.

A third aspect of the invention is a computer program product comprising a digital storage medium storing a program code. The digital storage medium is chosen from the group comprising a compact disk, CD, a digital versatile disk, DVD, a hard disk, HD, a random access memory, RAM, chip, a universal serial bus, USB, stick, a cloud storage and the like.

According to the invention, the program code causes a computing device connected to a fiber-optical routing platform to carry out a method according to an embodiment of the invention when being executed by a processor of the computing device. The computer program product enables the computing device to efficiently ensure a reliable success of a maintenance session of the fiber-optic routing platform.

An essential advantage of the inventive method is that the inventive method efficiently ensures a reliable success of a maintenance session of the fiber-optic routing platform. As a result, future failures may be avoided, a downtime of the fiber-optic routing platform is reduced, a knowledge of the fiber-optic routing platform is expanded and an accuracy of the monitoring unit is increased.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows a fiber-optic routing platform connected to by a monitoring unit according to an embodiment of the invention;
- Fig. 2: shows a graph of respective receive powers of two neighboring optic ports of the fiber-optic routing platform shown in fig. 1 without inserted FOATTs;
- Fig. 3: shows a graph of respective receive powers of the two neighboring optic ports addressed in fig. 2 with inserted FOATTs;
- Fig. 4: shows a combined graph of respective receive powers and optic to signal noise ratios, OSNR, of the two neighboring optic ports addressed in fig. 2 with inserted FOATTs; and
- Fig. 5: shows another graph of respective receive powers of the two neighboring optic ports addressed in fig. 2 with inserted FOATTs.

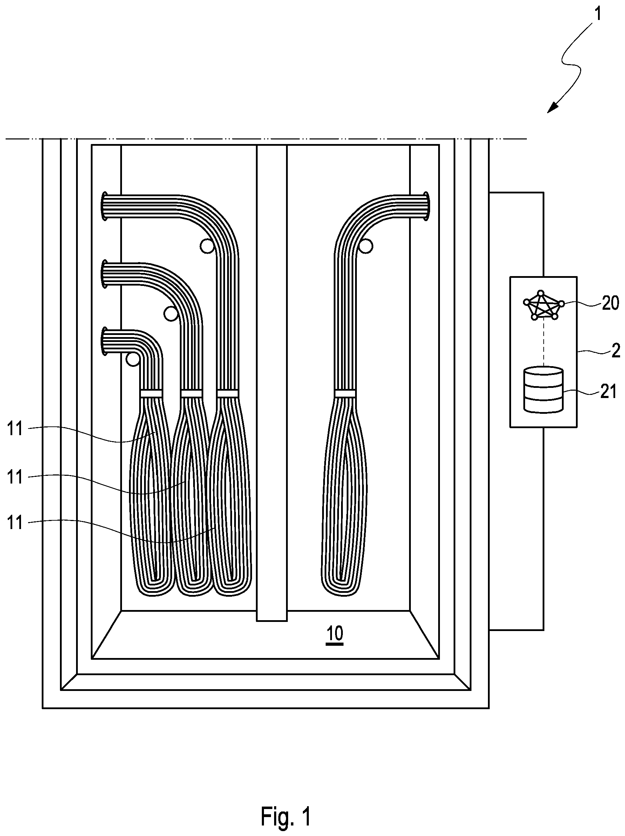

Fig. 1 schematically shows a fiber-optic routing platform 1. The fiber-optic routing platform 1 comprises a rack 10 and a plurality of optic ports, optic cables 11, optic connectors and fixed optic attenuators, FOATT, arranged in the rack 10.

The fiber optic routing platform 1 is connected to by a monitoring unit 2 according to an embodiment of the invention for a fiber-optic routing platform 1. The monitoring unit 2 comprises a computing device configured for carrying out a method according to an embodiment of the invention as follows.

The monitoring unit may be implemented by means of a computer program product comprising a digital storage medium storing a program code. The program code causes the computing device connected to the fiber-optical routing platform 1 to carry out the inventive method for monitoring the fiber-optic routing platform 1 when being executed by a processor of the computing device.

The monitoring unit 2 is connected to the fiber-optic routing platform 1, the fiber-optic routing platform 1 comprising the rack 10 and the plurality of optic ports, optic cables 11, optic connectors and fixed optic attenuators, FOATT, arranged in the rack 10.

The monitoring unit 2 receives a start signal from the fiber-optic routing platform 1, the start signal indicating a maintenance session of the fiber-optic routing platform 1 to be started. A door sensor of the fiber-optic routing platform 1 provides the monitoring unit 2 with the start signal when a door of the rack 10 is opened.

The monitoring unit 2, upon reception of the start signal, automatically starts measuring periodically an optic run-time parameter of an optic port the monitoring unit 2 is connected to, and recording each measured value of the optic run-time parameter. Recording the measured value may comprise storing the measured value in a time-series database, TSDB, 21.

The monitoring unit 2 further starts triggering an alert when evaluating recorded values indicate a malfunction of the fiber-optic routing platform 1 caused by the maintenance session. Preferably, an artificial neural network 20 of the monitoring unit 2 evaluates the recorded values. The artificial neural network 20 may be trained with historic session data, the historic session data comprising values recorded during a previous maintenance session.

Evaluating the recorded values may comprise comparing a pattern of recorded values with a plurality of predetermined patterns indicating a malfunction of the fiber-optic routing platform 1 caused by the maintenance session and triggering an alert when the pattern matches a predetermined pattern.

Evaluating the recorded values may additionally or alternatively comprise comparing a pattern of recorded values with a plurality of predetermined patterns indicating a temporary impairment of the fiber-optic routing platform 1 caused by the maintenance session and not triggering the alert when the pattern matches a predetermined pattern.

The monitoring unit 2 preferably receives a stop signal from the fiber-optic routing platform 1, the stop signal indicating the maintenance session having been stopped. A door sensor of the fiber-optic routing platform 1 provides the monitoring unit 2 with the stop signal when the door of the rack 10 is closed.

Advantageously, the monitoring unit 2, upon reception of the stop signal, evaluates the values recorded between the received start signal and the received stop signal and triggers an alert when evaluating the recorded values indicates a functional degradation of the fiber-optic routing platform 1 caused by the maintenance session or predicts a future failure of the fiber-optic routing platform 1.

Evaluating the recorded values may comprise comparing values recorded before a start of the maintenance session with values recorded after a stop of the maintenance session and triggering the alert when a difference of the compared values exceeds a predetermined degradation tolerance.

Evaluating the recorded values may also comprise comparing recorded values with a predetermined acceptance interval and triggering the alert when the compared values are outside the predetermined acceptance interval.

Evaluating the recorded values may additionally or alternatively comprise comparing a pattern of recorded values with a plurality of predetermined patterns indicating a future failure of the fiber-optic routing platform 1 and triggering the alert when the pattern matches a predetermined pattern.

The triggered alert advantageously indicates a functional degradation, a malfunction or a failure of an optic connector or a functional degradation, a malfunction or a damage of a FOATT.

Favorably, the monitoring unit 2 simultaneously measures the optic run-time parameter of a plurality of optic ports or each optic port of the fiber-optic 1 and/or simultaneously measures a plurality of optic run-time parameters and/or simultaneously measures a signal strength, a receive power 7.1, 7.2, an optic to signal noise ratio, OSNR, 8.1, 8.2, a back reflection coefficient, an attenuation level and/or an error rate as optic run-time parameters.

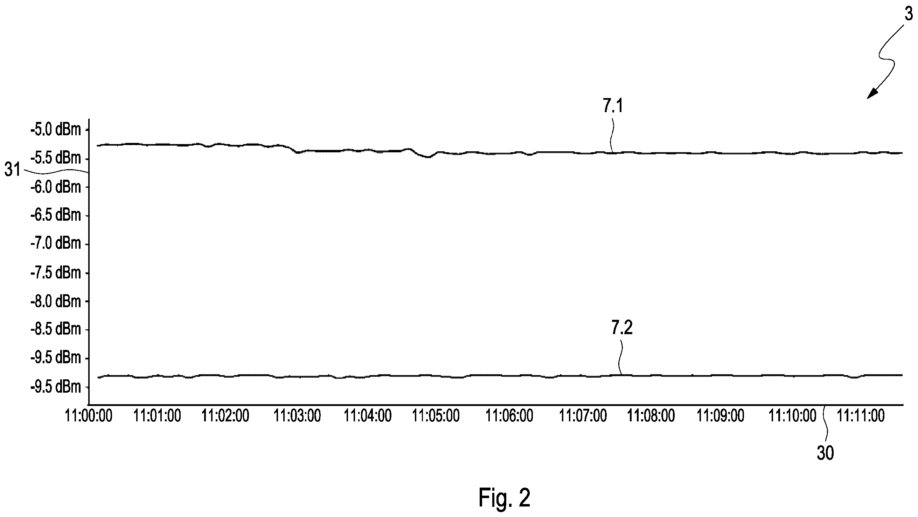

Fig. 2 shows a graph 3 of respective receive powers 7.1, 7.2 of two neighboring optic ports of the fiber-optic routing platform 1 shown in fig. 1 without inserted FOATTs. The graph 3 comprises an abscissa 30 indicating a clock time and an ordinate 31 indicating a power level. As can be seen from the respective curves, i.e., time series of the receive powers 7.1, 7.2, the receive powers 7.1, 7.2 are not substantially, i.e., very weakly impaired by bending the corresponding optic cables in all directions in case no FOATT is associated with the optic ports.

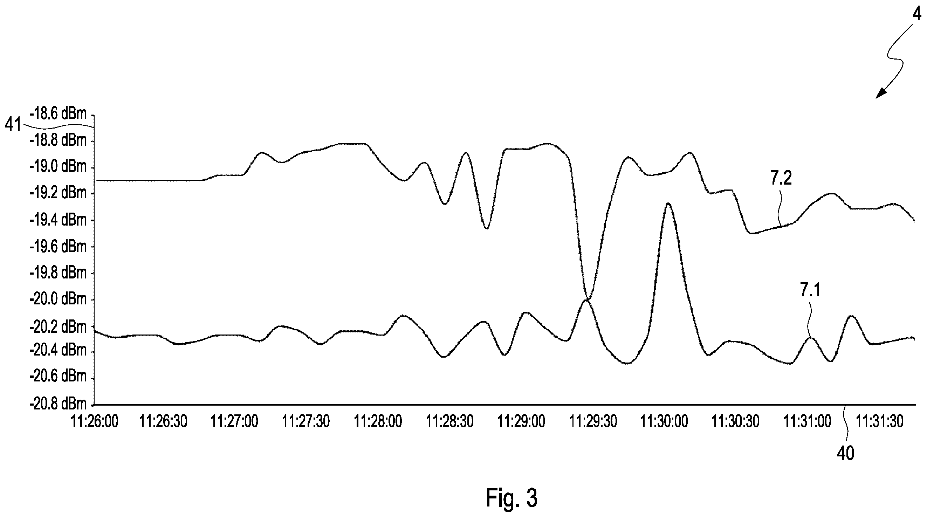

Fig. 3 shows a graph 4 of respective receive powers 7.1, 7.2 of the two neighboring optic ports addressed in fig. 2 with inserted FOATTs. The graph 4 comprises an abscissa 40 indicating a clock time and an ordinate 41 indicating a power level. A FOATT of 15 dB is associated with the optic port corresponding to the receive power 7.1 shown in fig. 2. A FOATT of 10 dB is associated with the optic port corresponding to the receive power 7.2 shown in fig. 2. As can be seen from the respective curves, i.e., time series of the receive powers 7.1, 7.2, the receive powers 7.1, 7.2 are temporarily impaired by bending the corresponding optic cables in all directions in case the respective FOATTs are inserted.

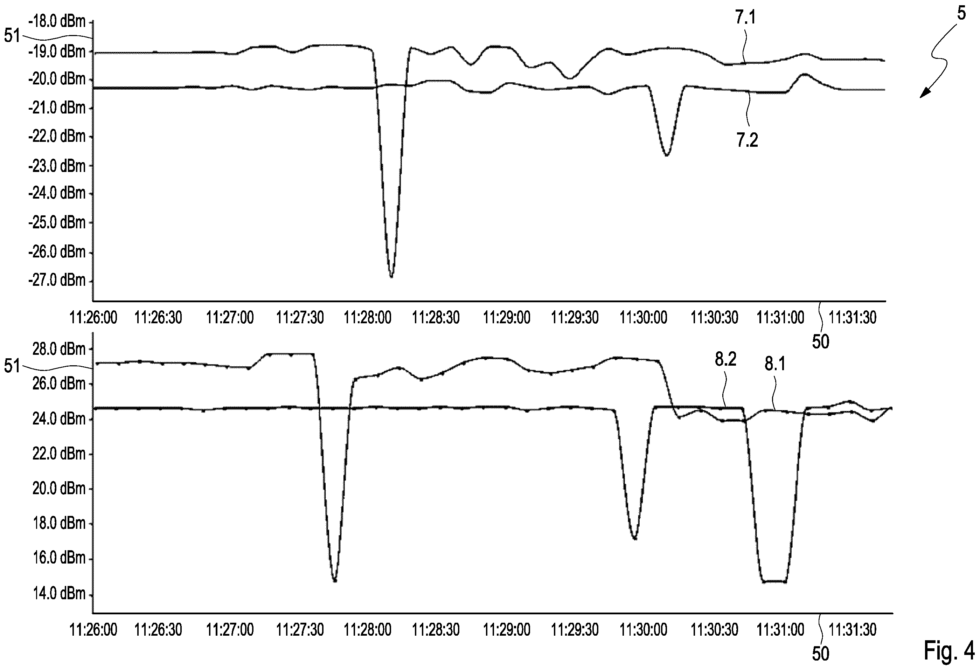

Fig. 4 shows a combined graph 5 of receive powers 7.1, 7.2 and optic to signal noise ratios, OSNR, 8.1, 8.2 of two neighboring optic ports addressed in fig. 2 with inserted FOATTs. The graph 5 comprises two abscissas 50 indicating a clock time and respective ordinates 51 each indicating a power level. The two upper curves, i.e., time series of respective receive powers 7.1, 7.2 similar to fig. 3. As can be seen from the respective lower curves, i.e., time series of respective OSNRs 8.1, 8.2, the OSNRs 8.1, 8.2 show droppings independent of droppings of the respective receive powers 7.1, 7.2. Different optic run-time parameters reveal different types of impairment or malfunction.

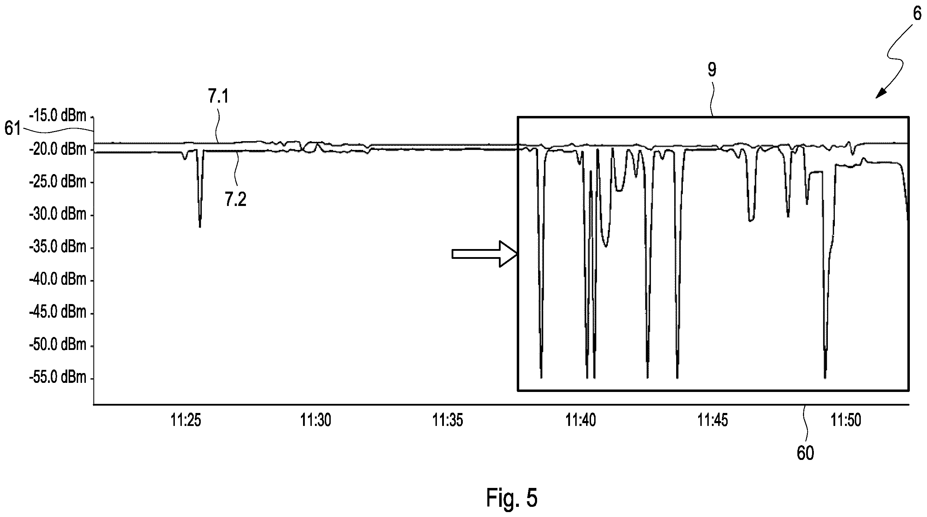

Fig. 5 shows another graph 6 of respective receive powers 7.1, 7.2 of the two neighboring optic ports addressed in fig. 2 with inserted FOATTs. The graph 6 comprises an abscissa 60 indicating a clock time and an ordinate 61 indicating a power level. As can be seen from the curves, i.e., time series of respective receive powers 7.1, 7.2, the receive powers 7.1., 7.2 start toggling after the maintenance session (see frame 9) due to a FOATT impaired by the finished maintenance session (left from frame 9).

### Reference Numerals

- 1: fiber-optic routing platform
- 10: rack
- 11: optic cable
- 2: monitoring unit
- 20: artificial neural network
- 21: time-series database, TSDB
- 3: graph
- 30: abscissa
- 31: ordinate
- 4: graph
- 40: abscissa
- 41: ordinate
- 5: graph
- 50: abscissa
- 51: ordinate
- 6: graph
- 60: abscissa
- 61: ordinate
- 7.1: receive power
- 7.2: receive power
- 8.1: optic to signal noise ratio, OSNR
- 8.2: optic to signal noise ratio, OSNR
- 9: frame

## Claims

1. A method for monitoring a fiber-optic routing platform (1), wherein
- a monitoring unit (2) is connected to a fiber-optic routing platform (1), the fiber-optic routing platform (1) comprising a rack (10) and a plurality of optic ports, optic cables (11), optic connectors and fixed optic attenuators, FOATT, arranged in the rack (10);
- the monitoring unit (2) receives a start signal from the fiber-optic routing platform (1), the start signal indicating a maintenance session of the fiber-optic routing platform (1) to be started;
- the monitoring unit (2), upon reception of the start signal, automatically starts measuring periodically an optic run-time parameter of an optic port the monitoring unit (2) is connected to, recording each measured value of the optic run-time parameter and triggering an alert when evaluating recorded values indicate a malfunction of the fiber-optic routing platform (1) caused by the maintenance session.

2. The method according to claim 1, wherein evaluating the recorded values comprises comparing a pattern of recorded values with a plurality of predetermined patterns indicating a malfunction of the fiber-optic routing platform (1) caused by the maintenance session and triggering an alert when the pattern matches a predetermined pattern.

3. The method according to claim 1 or 2, wherein evaluating the recorded values comprises comparing a pattern of recorded values with a plurality of predetermined patterns indicating a temporary impairment of the fiber-optic routing platform (1) caused by the maintenance session and not triggering the alert when the pattern matches a predetermined pattern.

4. The method according to one of claims 1 to 3, wherein
- the monitoring unit (2) receives a stop signal from the fiber-optic routing platform (1), the stop signal indicating the maintenance session having been stopped;
- the monitoring unit (2), upon reception of the stop signal, evaluates the values recorded between the received start signal and the received stop signal and triggers an alert when evaluating the recorded values indicates a functional degradation of the fiber-optic routing platform (1) caused by the maintenance session or predicts a future failure of the fiber-optic routing platform (1).

5. The method according to claim 4, wherein evaluating the recorded values comprises comparing values recorded before a start of the maintenance session with values recorded after a stop of the maintenance session and triggering the alert when a difference of the compared values exceeds a predetermined degradation tolerance.

6. The method according to one of claims 1 to 5, wherein evaluating the recorded values comprises comparing recorded values with a predetermined acceptance interval and triggering the alert when the compared values are outside the predetermined acceptance interval.

7. The method according to one of claims 1 to 6, wherein evaluating the recorded values comprises comparing a pattern of recorded values with a plurality of predetermined patterns indicating a future failure of the fiber-optic routing platform (1) and triggering the alert when the pattern matches a predetermined pattern.

8. The method according to one of claims 1 to 7, wherein the triggered alert indicates a functional degradation, a malfunction or a failure of an optic connector or a functional degradation, a malfunction or a damage of a FOATT.

9. The method according to one of claims 1 to 8, wherein a door sensor of the fiber-optic routing platform (1) provides the monitoring unit (2) with the start signal and/or the stop signal when a door of the rack (10) is opened and/or closed.

10. The method according to one of claims 1 to 9, wherein recording the measured value comprises storing the measured value in a time-series database, TSDB, (21).

11. The method according to one of claims 1 to 10, wherein the monitoring unit (2) simultaneously measures the optic run-time parameter of a plurality of optic ports or each optic port of the fiber-optic (1) and/or simultaneously measures a plurality of optic run-time parameters and/or simultaneously measures a signal strength, a receive power (7.1, 7.2), an optic to signal noise ratio, OSNR, (8.1, 8.2), a back reflection coefficient, an attenuation level and/or an error rate as optic run-time parameters.

12. The method according to one of claims 1 to 11, wherein an artificial neural network (20) of the monitoring unit (2) evaluates the recorded values.

13. The method according to claim 12, wherein the artificial neural network (20) is trained with historic session data, the historic session data comprising values recorded during a previous maintenance session.

14. A monitoring unit (2) for a fiber-optic routing platform (1), comprising a computing device configured for carrying out a method according to one of claims 1 to 13.

15. A computer program product, comprising a digital storage medium storing a program code, the program code causing a computing device connected to a fiber-optical routing platform (1) to carry out a method according to one of claims 1 to 13 when being executed by a processor of the computing device.
